# EUROPÄISCHE PATENTSCHRIFT

(11) **EP 2 893 217 B1**
(45) Veröffentlichungstag und Bekanntmachung des Hinweises auf die Patenterteilung: **18.10.2017**
(21) Anmeldenummer: 13747822.8
(22) Anmeldetag: 05.08.2013
(51) Int. Cl.: F16H 1/32

(54) **STELLGETRIEBE**
ADJUSTMENT MECHANISM
MÉCANISME DE RÉGLAGE

(30) Priorität: 06.09.2012 DE 102012215775
(43) Veröffentlichungstag der Anmeldung: 15.07.2015
(73) Patentinhaber: ZF Friedrichshafen AG, 88046 Friedrichshafen (DE)
(72) Erfinder: LIEDER, Sergej, 34119 Kassel (DE); BOERNER, Joerg, 88048 Friedrichshafen (DE); SEIDLER, Robert, 88048 Friedrichshafen (DE)
(86) Internationale Anmeldenummer: PCT/EP2013/066353
(87) Internationale Veröffentlichungsnummer: WO 2014/037174

(56) Entgegenhaltungen:
- EP-A2- 0 861 995
- WO-A1-2006/066985
- DE-A1- 19 603 004
- DE-A1- 19 720 255
- DE-A1- 19 756 967
- DE-A1- 19 907 912

## Beschreibung

Die Erfindung betrifft ein Stellgetriebe, welches von einem so genannten Wolfrom-Getriebe ausgeht.

Unter Wolfrom-Getriebe versteht man ein reduziertes Planetengetriebe, welches hohe Übersetzungen ins Langsame bei einem verträglichen Gesamtwirkungsgrad ermöglicht und auch als Stellgetriebe Verwendung findet.

Durch die DE 195 25 831 A1 der Anmelderin wurde ein derartiges Wolfrom-Getriebe bekannt. Der Antrieb erfolgt dabei über eine Zentralwelle mit einem kleinen Zentralrad, welches in Zahneingriff mit mehreren Stufenplaneten steht, die ihrerseits mit einem ersten fest angeordneten Hohlrad und einem zweiten umlaufenden, als Abtrieb ausgebildeten Hohlrad kämmen.

Aus der nicht vorveröffentlichten DE 10 2011 078 130.7 ist ein Umlaufgetriebe bekannt, welches einen Satz von drei zylindrischen Hohlrädern und zwei Exzenterräder mit Beveloidverzahnung mit geneigten Exzenterachsen sowie eine Zentralwelle umfasst. Dabei kämmen die Beveloidverzahnungen der Exzenterräder mit den zylindrischen Verzahnungen der Hohlräder. Dieses Umlaufgetriebe zeichnet sich dadurch aus, dass bei den drei Hohlrädern das mittlere Hohlrad fest angeordnet ist und die beiden äußeren Hohlräder umlaufen und miteinander gekoppelt sind. Als nachteilig bei diesem Umlaufgetriebe stellt sich heraus, dass die gesamte Last auf dem mittleren Hohlrad liegt. Die DE 199 07 912 A2 offenbart die Merkmale des Oberbegriffs des Anspruchs 1. Es ist daher Aufgabe der Erfindung, ein Stellgetriebe anzugeben, mit welchem es möglich ist, eine Lastaufteilung zu gewährleisten.

Diese Aufgabe wird mit dem Stellgetriebe gemäß den Merkmalen des geltenden Patentanspruchs 1 gelöst. Vorteilhafte Ausgestaltungen der Erfindung ergeben sich aus den Unteransprüchen.

Gemäß Patentanspruch 1 ist ein Stellgetriebe vorgesehen, welches einen Satz von zylindrischen Hohlrädern und zwei Exzenterräder mit Beveloidverzahnung mit geneigten Exzenterachsen sowie eine Zentralwelle umfasst. Die beiden Exzenterräder mit Beveloidverzahnung sind auf der Zentralwelle gelagert und weisen jeweils unterschiedliche Drehachsen auf. Dabei kämmen die Beveloidverzahnungen der Exzenterräder mit den zylindrischen Verzahnungen der Hohlräder. Die Erfindung zeichnet sich dadurch aus, dass der Satz von Hohlrädern ein mittleres umlaufendes Hohlrad und zwei äußere, zu dem mittleren Hohlrad benachbarte fest angeordnete Hohlräder umfasst.

Unter einer Beveloidverzahnung ist eine kegelige oder konische Stirnradverzahnung zu verstehen. Für das erfindungsgemäße Umlaufgetriebe ergeben sich folgende Vorteile: Aufgrund eines konvex- konkaven Zahnkontakts ergibt sich eine sehr geringe Pressung. Da eine hohe Überdeckung pro Eingriff (> 4) vorliegt, kann ein hohes Abtriebsmoment realisiert werden. Durch die hohe Überdeckung erfolgt eine allmähliche Lastübernahme, verbunden mit einer geringen Geräuschanregung. Bei einer geringen Anzahl von erforderlichen Bauteilen lassen sich hohe Übersetzungen realisieren. Es treten nur eine geringe Gleitbewegung und damit geringe Verzahnungsverluste auf. Darüber hinaus ergibt sich eine Lastaufteilung auf die beiden äußeren fest angeordneten Hohlräder.

Aufgrund einer bevorzugten Ausführungsform kämmt das erste Exzenterrad einerseits mit dem mittleren, umlaufenden Hohlrad und andererseits mit dem ersten fest angeordneten Hohlrad. Das zweite Exzenterrad kämmt sowohl mit dem mittleren, umlaufenden Hohlrad als auch mit dem zweiten fest angeordneten Hohlrad. Beide Exzenterräder mit Beveloidverzahnung wälzen sich somit am ersten bzw. zweiten fest angeordneten Hohlrad ab und treiben jeweils das mittlere Hohlrad, welches ein gemeinsames Getriebeglied bildet. Damit ergibt sich eine Lastaufteilung auf die beiden äußeren fest angeordneten Hohlräder. Außerdem ergibt sich eine kompakte Bauweise und eine hohe Überdeckung, da die Zähnezahlen der Hohlräder und der Exzenterräder mit Beveloidverzahnung keine großen Unterschiede aufweisen.

Nach einer weiteren bevorzugten Ausführungsform sind die Zahneingriffe des ersten Exzenterrades und des zweiten Exzenterrades diametral zueinander angeordnet, d.h. in Bezug auf die Zentralachse. Daraus ergibt sich der Vorteil, dass die radiale Belastung der Zentralwelle und der Hohlräder relativ gering ist.

Nach einer weiteren bevorzugten Ausführungsform werden die beiden äußeren fest angeordneten Hohlräder abgestützt, so dass ein Verdrehen ausgeschlossen, insbesondere ein Verdrehen der beiden äußeren Hohlräder zueinander als auch bezüglich des mittleren umlaufenden Hohlrades.

Nach einer weiteren bevorzugten Ausführungsform ist die Zentralwelle, auf welcher die Exzenterräder mit Beveloidverzahnung laufen, als Antrieb ausgebildet, während das mittlere umlaufende Hohlrad den Abtrieb bildet. Hierbei ergibt sich eine hohe Übersetzung ins Langsame, d.h. auch ein hohes Abtriebsmoment.

Nach einer weiteren bevorzugten Ausführungsform ist zwischen den beiden Exzenterrädern mit Beveloidverzahnung ein in axialer Richtung wirkendes Federelement angeordnet. Durch diese Anfederung der beiden Exzenterräder mit Beveloidverzahnung kann ein spielfreier Zustand erreicht werden: das Getriebe läuft dann im lastarmen Zustand spielfrei, und unter Last stellt sich in Abhängigkeit von der Steifigkeit des Federelements ein mehr oder weniger großes Verdrehspiel ein.

Nach einer weiteren bevorzugten Ausführungsform kann die Zentralwelle als Hohlwelle ausgebildet werden. Daraus ergibt sich eine kompakte koaxiale Bauweise mit der Möglichkeit für einen zentralen Durchtrieb.

In einer weiteren bevorzugten Ausführungsform ist eine Planetenradstufe vorhanden, insbesondere der Zentralwelle vorgeschaltet. Das Sonnenrad der Planetenradstufe ist mit der Antriebswelle verbunden und die Welle des Planetenrades ist mit der Zentralwelle verbunden. Die Zentralwelle stützt sich zweckmäßig am Planetenrad und einem fest angeordneten Hohlrad ab. Es ist aber in einer weiteren bevorzugten Ausführungsform auch möglich, dass die Zentralwelle an beiden fest angeordneten Hohlrädern abgestützt ist.

In einer weiteren bevorzugten Ausführungsform ist eine Stirnradstufe vorhanden, insbesondere der Zentralwelle vorgeschaltet, mit mindestens einem zweistufigen Stirnrad, wobei das Stirnrad ortsfest mit einem fest angeordneten Hohlrad verbunden ist. Zweckmäßig können zur Lastaufteilung weitere zweistufige Stirnräder verwendet werden.

Das Stellgetriebe weist einen Schwenkbereich von unter 360 Grad auf, bezogen auf die Drehung des Abtriebshohlrades (mittleres Hohlrad). Diese Einschränkung ergibt sich aufgrund der äußeren Abstützung der beiden äußeren fest angeordneten (feststehenden) Hohlräder. Es ist z.B. möglich, das Umlaufgetriebe als Stellantrieb für Klappenaktuatoren bei Flächenfliegern einzusetzen. Schließlich kann das erfindungsgemäße Umlaufgetriebe auch als Stellantrieb für Sitzaktuatoren eingesetzt werden. Hierbei ist die Verwendung nicht nur auf die Luftfahrt beschränkt, sondern kann auch in Sitzaktuatoren von Fahrzeugen Verwendung finden.

Ein Ausführungsbeispiel der Erfindung ist in den Zeichnungen dargestellt und wird im Folgenden näher beschrieben, wobei sich aus der Beschreibung und/oder den Zeichnungen weitere Merkmale und/oder Vorteile ergeben können. Es zeigen
- Fig. 1: ein Umlaufgetriebe in 3D-Darstellung,
- Fig. 2: das Umlaufgetriebe gemäß Fig. 1 als Halbschnitt in 3D-Darstellung,
- Fig. 3: das Umlaufgetriebe in einem Axialschnitt mit Hohlrädern und Exzenterrädern mit Beveloidverzahnung,
- Fig. 4: das Umlaufgetriebe mit Hohlrädern und auf der Zentralwelle gelagerten Exzenterrädern mit Beveloidverzahnung im Axialschnitt,
- Fig. 5: einen Längsschnitt durch ein erfindungsgemäßes Stellgetriebe mit einer Planetenradstufe in einer ersten Ausführungsform
- Fig. 6: einen Längsschnitt durch ein erfindungsgemäßes Stellgetriebe mit einer Planetenradstufe in einer zweiten Ausführungsform
- Fig. 7: einen Längsschnitt durch ein erfindungsgemäßes Stellgetriebe mit einer zweistufigen Stirnradstufe.

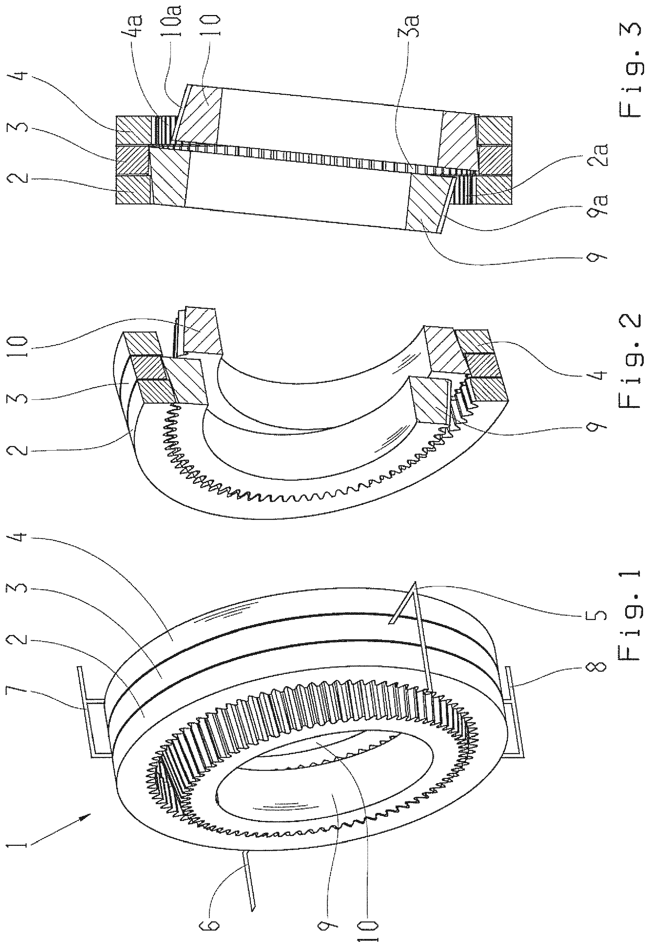

Fig. 1 zeigt ein Umlaufgetriebe 1, welches einen Satz von drei scheibenartig ausgebildeten, nebeneinander angeordneten Hohlrädern 2, 3, 4 aufweist. Das mittlere Hohlrad 3 ist als umlaufendes Rad ausgebildet. Die beiden äußeren Hohlräder 2, 4 sind als Festräder ausgebildet und ortsfest abgestützt. Hierbei sind die beiden äußeren Hohlräder durch zwei diametral zueinander angeordnete Bügel 7, 8 miteinander gekoppelt. In den Hohlrädern 2, 3, 4, welche zylindrische Innenverzahnungen (hier ohne Bezugszahl) aufweisen, sind zwei Exzenterräder 9, 10 mit Beveloidverzahnungen (hier ohne Bezugszahl) angeordnet.

Fig. 2 zeigt das Umlaufgetriebe 1 in 3D-Darstellung als Halbschnitt. Aus dieser Schnittdarstellung ist erkennbar, dass das erste Exzenterrad 9 mit seiner Beveloidverzahnung in Eingriff mit den zylindrischen Innenverzahnungen des ersten festangeordneten Hohlrades 2 und des umlaufenden Hohlrades 3 steht, während das zweite Exzenterrad 10 mit seiner Beveloidverzahnung in Eingriff mit dem zweiten fest angeordneten Hohlrad 4 und dem umlaufenden Hohlrad 3 steht.

In Fig. 3 sind einerseits die zylindrischen Innenverzahnungen 2a, 3a, 4a der Hohlräder 2, 3, 4 und andererseits die Beveloidverzahnungen 9a, 10a der Exzenterräder 9, 10 erkennbar. Der Zahneingriffe 9a, 2a, 3a des ersten Exzenterrades 9 und der Zahneingriff 10a, 3a, 4a des zweiten Exzenterrades 10 liegen - wie die Schnittdarstellung zeigt - in der Zeichenebene, d.h. sie sind diametral zueinander angeordnet. Daraus ergibt sich eine geringere radiale Belastung für die Hohlräder 2, 3, 4.

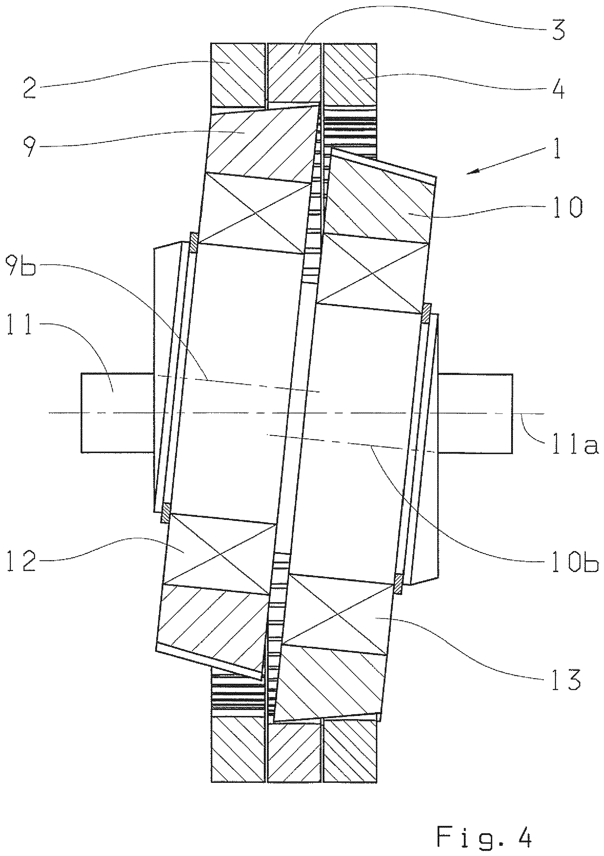

Fig. 4 zeigt einen vergrößerten Axialschnitt des Umlaufgetriebes 1 mit einer Zentralwelle 11, welche eine Zentralachse 11a aufweist. Auf der Zentralwelle 11 sind die beiden Exzenterräder 9, 10 über Lager 12, 13 exzentrisch gelagert. Die Exzenterräder 9, 10 weisen Exzenterachsen 9b, 10b auf, welche jeweils geneigt gegenüber der Zentralachse 11a angeordnet sind.

Der Antrieb des Umlaufgetriebes 1, welches auch als Wolfrom-Getriebe bezeichnet werden kann, erfolgt über die Zentralwelle 11, während der Abtrieb über das mittlere umlaufende Hohlrad 3 erfolgt. Durch die Neigung der Exzenterachsen 9b, 10b ist es möglich, dass sich die Zahneingriffe der beiden Exzenterräder 9, 10 mit dem umlaufenden Hohlrad 3 diametral gegenüber liegen. Beide Exzenterräder 9, 10 wälzen sich einerseits an den fest angeordneten Hohlräder 2, 4 ab und stehen andererseits in Zahneingriff mit dem umlaufenden Hohlrad 3, wodurch der Abtrieb bewirkt wird.

Nach einer bevorzugten Ausführungsform ist für das Umlaufgetriebe 1 ein Übersetzungsverhältnis von i = 33 vorgesehen, d. h. das Verhältnis zwischen den Drehzahlen der Antriebs- und Zentralwelle 11 und des abtreibenden Hohlrades 3. Die Zähnezahl des Abtriebshohlrades 3, beträgt - wegen der zwei sich gegenüber liegenden Zahneingriffe - das Doppelte der Übersetzung i, d. h. 66. Die festen Hohlräder 2, 4 besitzen jeweils zwei Zähne weniger als das umlaufende Hohlrad 3, d.h. 64. Die Beveloidverzahnungen 9a, 10a der Exzenterräder 9, 10 weisen eine geringfügig kleinere Zähnezahl als die festen Hohlräder 2, 4 auf. Damit erreicht man eine sehr große wirksame Profilüberdeckung und damit auch eine große Überlastsicherheit.

Die Zentralwelle 11 kann auch - was nicht dargestellt ist - als Hohlwelle ausgebildet sein.

Durch die Paarung der zylindrischen Hohlräder 2, 3, 4 mit den Exzenterrädern 9, 10, die auf den geneigten Achsen 9b, 10b laufen, kann man durch Einstellung des axialen Abstandes der Exzenterräder 9, 10 einen spielfreien Zustand erreichen: Wird als axiale Abstützung zwischen den Exzenterrädern 9, 10 eine Feder (nicht dargestellt) eingebaut, läuft das Umlaufgetriebe 1 im lastarmen Zustand spielfrei, und unter Last stellt sich in Abhängigkeit von der Federsteifigkeit der Feder ein mehr oder weniger großes Verdrehspiel ein.

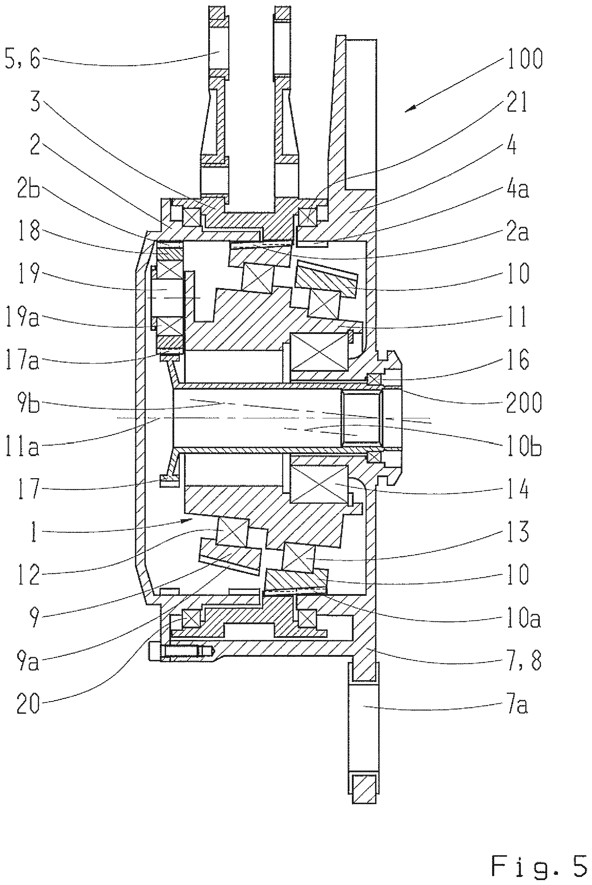

Fig. 5 zeigt einen Längsschnitt durch ein Stellgetriebe 100 mit einem von einer Planetenradstufe angetriebenen Umlaufgetriebe, so wie es in den Fig. 1 bis 4 erläutert ist. Das Umlaufgetriebe besteht im Wesentlichen aus der Zentralwelle 11 und den beiden auf der Zentralwelle 11 mittels der Lager 12, 13 angeordneten Exzenterrädern 9, 10. Die Planetenradstufe weist ein Sonnenrad 17 auf, welches mit der Antriebswelle 200 fest verbunden ist. Die Antriebswelle 200 ist mittels eines Lagers 16 drehbar um die Zentralachse 11a gelagert, wobei sich das Lager 16 auf dem ersten fest angeordneten Hohlrad 4 abstützt. Die Antriebswelle 200 ist dabei durch das gesamte Umlaufgetriebe geführt.

Die Verzahnung 17a des Sonnenrades 17 der Planetenradstufe ist im Eingriff mit der Verzahnung 18a eines Planetenrades 18. In Fig. 5 ist lediglich ein Planetenrad 18 eingezeichnet. Üblicherweise weist eine Planetenradstufe mindesten 3 Planetenräder auf, wobei dann alle Planetenräder 18 der Planetenradstufe im Eingriff mit dem Sonnenrad 17 stehen. Die Verzahnung 18a des Planetenrades 18 bzw. der Planetenräder steht weiterhin im Eingriff mit der Innenverzahnung 2b des zweiten fest angeordneten Hohlrades 2. Die Planetenradstufe, gebildet durch das Sonnenrad 17 und die Planetenräder 18, ist somit derart innerhalb des zweiten fest angeordneten Hohlrades 2 angeordnet, dass die Planetenradstufe drehbar um die Zentralachse 11a ist.

In einem Planetenrad 18 befindet sich eine Welle 19, welche mittels Lager 19a im Planetenrad 18 drehbar gelagert ist. Die Welle 19 ist mit der Zentralwelle 11 fest verbunden. Dadurch, dass die Verzahnung 18a des Planetenrades 18 im Eingriff mit der Innenverzahnung 2b des zweiten fest angeordneten Hohlrades 2 steht und sich dadurch an dem Hohlrad 2 abstützt, bewegt sich bei Drehung der Antriebswelle 200 und einer dadurch verbundenen Rotation des Planetenrades 18 die Zentralwelle 11.

Die Zentralwelle 11 stützt sich mittels eines ersten Lagers 14 am ersten fest angeordneten Hohlrad 4 ab und ist somit drehbar um die Zentralachse 11a. Weiterhin stützt sich die Zentralwelle 11 an der Welle 19 des Planetenrades 18 ab.

Das erste Exzenterrad 9 stützt sich auf der Außenkontur der Zentralwelle 11 mittels eines Lagers 12 ab. Ebenso stützt sich das zweite Exzenterrad 10 auf der Außenkontur der Zentralwelle 11 mittels eines weiteren Lagers 13 ab.

Die Verzahnung 9a des ersten Exzenterrades 9 steht im Eingriff mit der Innenverzahnung 2a des zweiten fest angeordneten Hohlrades 2 sowie mit des Innenverzahnung 3a des drehbar angeordneten mittleren Hohlrades 3. Das Exzenterrad 9 ist dabei derart angeordnet, dass es um die Drehachse 9b drehbar ist.

Die Verzahnung 10a des zweiten Exzenterrades 10 steht im Eingriff mit der Innenverzahnung 4a des ersten fest angeordneten Hohlrades 4 sowie mit der Innenverzahnung 3a des drehbar angeordneten mittleren Hohlrades 3. Das Exzenterrad 10 ist dabei derart angeordnet, dass es um die Drehachse 10b drehbar ist.

Die beiden äußeren fest angeordneten Hohlräder 2, 4 sind mittels Bügel 7, 8 miteinander verbunden. Mittels eines Zapfens 7a, welcher mit den Bügel 7, 8 verbunden ist, ist gewährleistet, dass die Hohlräder 2, 4 verdrehsicher angeordnet sind. Zweckmäßig sind die Bügel 7, 8 diametral zueinander angeordnet (nicht dargestellt).

Das mittlere Hohlrad 3 ist drehbar um die Zentralachse 11a angeordnet, wobei es sich mittels eines ersten und eines zweiten Lagers 20, 21 an der Außenkontur der beiden äußeren fest angeordneten Hohlräder 2, 4 abstützt. Durch die Drehung der mittleren Hohlrades 3 können somit die Zapfen 5, 6 verdreht werden, wodurch z.B. eine Schubstange einer nachgeordneten Landeklappe eines Flugzeugs verstellt werden kann (nicht dargestellt).

Fig. 5 zeigt nur einen Zapfen 5, 6. Es können aber auch zwei Zapfen 5, 6 vorhanden sein, welche diametral zueinander angeordnet sind. Die Anordnung der Zapfen 5, 6 und Bügel 7, 8 ist konstruktiv so gelöst, dass eine 360 Grad Drehung der Zapfen 5, 6 nicht möglich ist. Zum Beispiel sind die diametral zueinander angeordneten Zapfen 5, 6 und die Bügel 7, 8 gegeneinander jeweils im Winkel um etwa 90 Grad in Umfangsrichtung versetzt. Daraus ergibt sich ein Schwenkbereich der Zapfen 5,6 von ca. 70 Grad Verdrehwinkel in beide Richtungen.

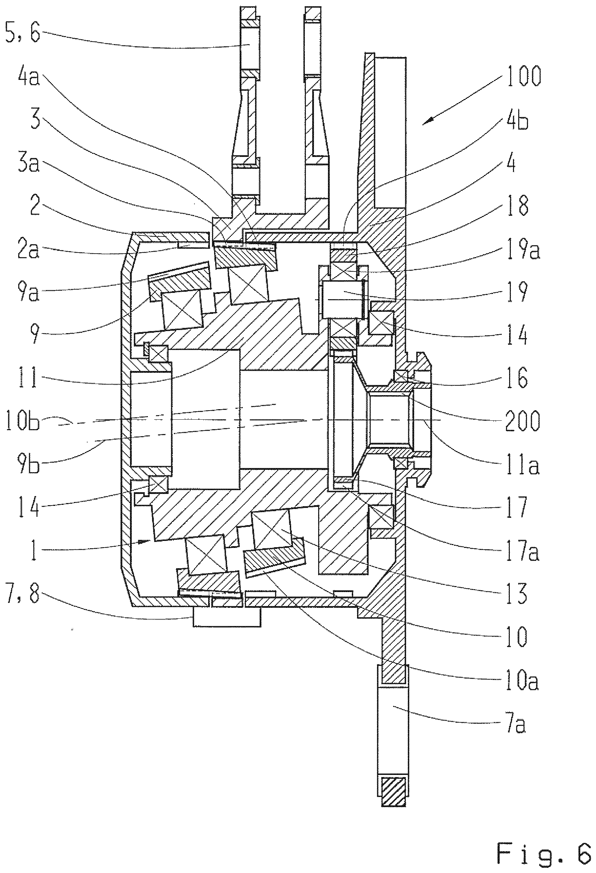

Fig. 6 zeigt einen Längsschnitt durch ein Stellgetriebe 100 mit einem von einer Planetenradstufe angetriebenen Umlaufgetriebe gemäß den Ausführungen zu Fig. 5. Im Unterschied zu Fig. 5 ist hier die Planetenradstufe nicht innerhalb des zweiten feststehenden Hohlrades 2 angeordnet, sondern innerhalb des ersten feststehenden Hohlrades 4. Die Planetenradstufe weist ein Sonnenrad 17 auf, welches mit der Antriebswelle 200 fest verbunden ist, wobei die Antriebswelle 200 mittels eines Lagers 16 drehbar um die Zentralachse 11a gelagert ist und wobei das Lager 16 sich dabei auf dem ersten fest angeordneten Hohlrad 4 abstützt. Im Unterschied zu der Ausführungsform in Fig.5 ist die Antriebswelle 200 hier nicht durch das Umlaufgetriebe 1 bzw. die Zentralwelle 11 geführt.

Die Verzahnung 17a des Sonnenrades 17 der Planetenradstufe ist im Eingriff mit der Verzahnung 18a eines Planetenrades 18. Die Innenverzahnung 4b des ersten feststehenden Hohlrades 4 steht im Eingriff mit der Verzahnung 18a des Planetenrades 18. Somit ist gewährleistet, dass die Planetenradstufe drehbar innerhalb des ersten feststehenden Hohlrades 4 angeordnet ist.

Das Planetenrad 18 ist auf einer Welle 19 angeordnet, welche im Planetenrad 18 mittels eines Lagers 19a drehbar gelagert ist. Die Welle 19 ist mit der Zentralwelle 11 verbunden, wobei die Zentralwelle 11 mittels eines ersten Lagers 14 an dem ersten feststehenden Hohlrad 4 und mittels eines zweiten Lagers 14a an dem zweiten feststehenden Hohlrad 4 abgestützt ist, so dass die Zentralwelle 11 drehbar ist um die Zentralachse 11a.

Die beiden feststehenden Hohlräder 2, 4 sind mittels eines Bügels 7, 8 miteinander verbunden. Das mittlere Hohlrad 3 ist mit Zapfen 5, 6 verbunden. Entsprechend den Ausführungen zu Fig. 5 sind zweckmäßig zwei diametral zueinander angeordnete Bügel vorhanden. Das mittlere Hohlrad 3 weist zwei parallel zueinander angeordnete Zapfen 5, 6 zur Betätigung eines Stellmechanismus auf. Entsprechend der Ausführungen in Fig. 5 bis Fig. 7 beschränken die Bügel 7, 8 den Schwenkbereich der Zapfen 5, 6 auf unter 360 Grad. Zum Beispiel sind die diametral zueinander angeordneten Zapfen 5, 6 und die Bügel 7, 8 gegeneinander jeweils im Winkel um etwa 90 Grad in Umfangsrichtung versetzt. Daraus ergibt sich ein Schwenkbereich der Zapfen 5, 6 von ca. 70 Grad Verdrehwinkel in beide Richtungen.

Die Anordnung der beiden Exzenterräder 9, 10 an der Zentralwelle 11 sowie der Eingriff der Verzahnungen 9a, 10a der beiden Exzenterräder 9, 10 in die Innenverzahnungen 2a, 3a, 4a der Hohlräder 2, 3, 4 entspricht den Ausführungen in Fig. 5.

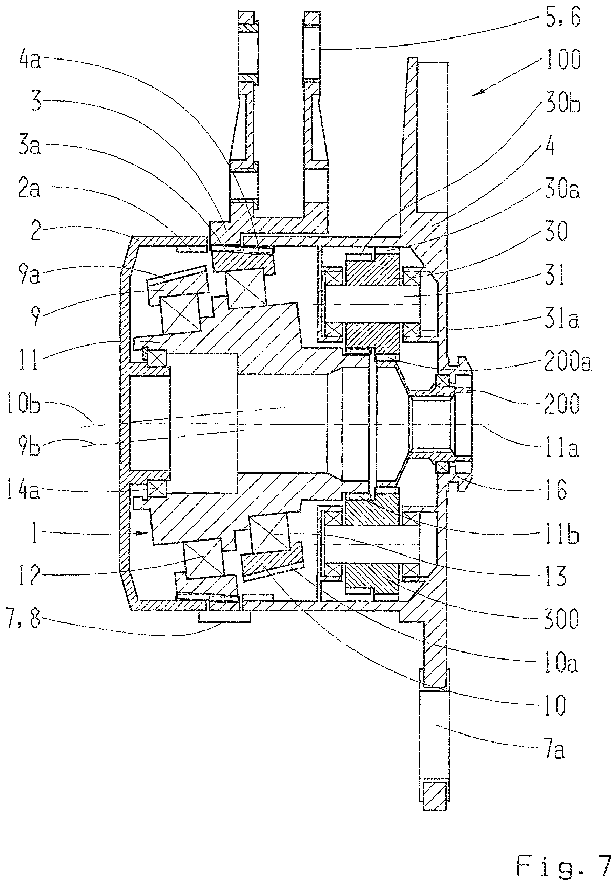

Fig. 7 zeigt einen Längsschnitt durch ein Stellgetriebe 100 mit einer, von einer zweistufigen Stirnradstufe, angetriebene Zentralwelle. Das Umlaufgetriebe ist wie in Fig. 5 und Fig. 6 ausgeführt durch die Zentralwelle 11 und die beiden Exzenterräder 9, 10 gebildet und entspricht im Wesentlichen einem Beveloid-Wolfrom-Taumelgetriebe.

Die Antriebswelle 200 steht im Eingriff mit dem Stirnrad 30 und das Stirnrad 30 steht mit der ersten Verzahnung 30a der ersten Stufe im Eingriff mit der Antriebswelle 200. Das Stirnrad 30 ist auf einer Welle 31 angeordnet, welche sich mittels Lager 31a an dem ersten feststehenden Hohlrad 4 abstützt. Somit ist gewährleistet, dass das Stirnrad 30 ortsfest und drehbar bezüglich des ersten feststehenden Hohlrades 4 angeordnet ist. Im Vergleich hierzu ist das Planetenrad 18 gemäß Fig. 5 und Fig. 6 umlaufend angeordnet. Die zweite Verzahnung 30b der zweiten Stufe des Stirnrades 30 steht in Eingriff mit der Verzahnung 11b der Zentralwelle 11. Das zweistufige Stirnrad 30 kann aus einem einzelnen Teil aufgebaut sein, welches die beiden Verzahnungen 30a, 30b trägt, oder es kann aus zwei getrennten Teilen aufgebaut sein, wobei ein Teil die erste Verzahnung 30a und ein anderes Teil die zweite Verzahnung 30b aufweist. Zweckmäßig weisen die beiden Verzahnungen 30a, 30b unterschiedliche Zähnezahlen auf.

In Fig. 7 ist symmetrisch zur Zentralachse 11 zum ersten Stirnrad 30 ein zweites Stirnrad 300 eingezeichnet. Dadurch ist es möglich, die Last auf zwei Stirnräder aufzuteilen. Es ist auch möglich noch weitere Stirnräder vorzusehen, so dass die Last pro Stirnrad weiter reduziert werden kann.

Die Zentralwelle 11 stützt sich einerseits mittels des zweiten Lagers 14a auf dem zweiten feststehenden Hohlrad 2 ab und andererseits an dem Stirnrad 30.

Das erste Exzenterrad 9 stützt sich auf der Außenkontur der Zentralwelle 11 mittels eines Lagers 12 ab. Ebenso stützt sich das zweite Exzenterrad 10 auf der Außenkontur der Zentralwelle 11 mittels eines weiteren Lagers 13 ab.

Die Verzahnung 9a des ersten Exzenterrades 9 steht im Eingriff mit der Innenverzahnung 2a des zweiten fest angeordneten Hohlrades 2 sowie mit der Innenverzahnung 3a des drehbar angeordneten mittleren Hohlrades 3. Das Exzenterrad 9 ist dabei derart angeordnet, dass es um die Drehachse 9b drehbar ist. Die Verzahnung 10a des zweiten Exzenterrades 10 steht im Eingriff mit der Innenverzahnung 4a des ersten fest angeordneten Hohlrades 4 sowie mit des Innenverzahnung 3a des drehbar angeordneten mittleren Hohlrades 3. Das Exzenterrad 10 ist dabei derart angeordnet, dass es um die Drehachse 10b drehbar ist. Die Eingriffe der Verzahnungen 9a, 10a der beiden Exzenterräder 9, 10 in die Innenverzahnung 3a des mittleren Hohlrades 3 liegen, entsprechend den Ausführungen in Fig. 5 und 6 diametral zueinander.

Die beiden äußeren fest angeordneten Hohlräder 2, 4 sind mittels Bügel 7, 8 miteinander verbunden. Mittels eines Zapfens 7a, welcher mit den Bügel 7, 8 verbunden ist, ist gewährleistet, dass die Hohlräder 2, 4 verdrehsicher angeordnet sind.

Die Übersetzungen der Planetenradstufe in Fig. 5 bzw. Fig. 6 sowie die Übersetzung der Stirnradstufe in Fig. 7 multipliziert mit der Übersetzung des Umlaufgetriebes aus den Fig. 1 bis 4 bzw. auch dargestellt in Fig. 5 bis 7 ergibt die Übersetzung des Stellgetriebes 100. Hierbei können Übersetzungen bis i=220 und mehr erreicht werden.

### Bezugszeichen

- 1: Umlaufgetriebe
- 2: zweite feststehende Hohlrad
- 2a: Verzahnung des zweiten feststehenden Hohlrades für das Exzenterrad mit Beveloidverzahnung
- 2b: Verzahnung des zweiten feststehenden Hohlrades für die Planetenradstufe
- 3: umlaufende Hohlrad
- 3a: Verzahnung des umlaufenden Hohlrades
- 4: erste feststehende Hohlrad
- 4a: Verzahnung des ersten feststehenden Hohlrades für das Exzenterrad mit Beveloidverzahnung
- 4b: Verzahnung des ersten feststehenden Hohlrades für die Planetenradstufe
- 5: Zapfen
- 6: Zapfen
- 7: Bügel
- 7a: Zapfen mit Bügel verbunden
- 8: Bügel
- 9: Exzenterrad
- 9a: Beveloidverzahnung
- 9b: Exzenterachse
- 10: Exzenterrad
- 10a: Beveloidverzahnung
- 10b: Exzenterachse
- 11: Zentralwelle
- 11a: Zentralachse
- 12: Lager für Exzenterrad
- 13: Lager für Exzenterrad
- 14: erste Lager für Zentralwelle
- 14a: zweite Lager für Zentralwelle
- 16: Lager für Antriebswelle
- 17: Sonnenrad
- 17a: Verzahnung des Sonnenrades
- 18: Planetenrad
- 18a: Verzahnung des Planetenrades
- 19: Welle des Planetenrades
- 19a: Lager für Welle des Planetenrades
- 20: erste Lager für mittleres Hohlrad
- 21: zweite Lager für mittleres Hohlrad
- 30: erste Stirnrad
- 30a: Verzahnung des Stirnrades
- 31: Welle des Stirnrades
- 31a: Lager der Welle des Stirnrades
- 100: Stellgetriebe
- 200: Antriebswelle
- 200a: Verzahnung der Antriebswelle
- 300: zweite Stirnrad

## Patentansprüche

1. Stellgetriebe (1), umfassend einen Satz von koaxial zu einer Zentralachse (11a) angeordneten Hohlrädern (2, 3, 4) mit zylindrischer Verzahnungen (2a, 3a, 4a), zwei Exzenterräder (9, 10) mit Beveloidverzahnungen (9a, 10a), welche in Zahneingriff mit den zylindrischen Verzahnungen (2a, 3a, 4a) der Hohlräder (2, 3, 4) stehen, und Exzenterachsen (9b, 10b), weiche gegenüber der Zentralachse (11a) geneigt sind, und einem mittels einer Antriebswelle (200) angetriebene Zentralwelle (11), auf welchem die Exzenterräder (9, 10) gelagert sind, **dadurch gekennzeichnet, dass** der Satz von Hohlrädern (2, 3, 4) ein mittleres umlaufendes Hohlrad (3) und zwei benachbarte, fest angeordnete Hohlräder (2, 4) umfasst.

2. Stellgetriebe nach Anspruch 1, **dadurch gekennzeichnet, dass** das erste Exzenterrad (9) in Zahneingriff mit dem ersten festen Hohlrad (2) und dem mittleren umlaufenden Hohlrad (3) und das zweite Exzenterrad (10) im Zahneingriff mit dem zweiten festen Hohlrad (4) und dem umlaufenden Hohlrad. (3) stehen.

3. Stellgetriebe nach Anspruch 1 oder 2, **dadurch gekennzeichnet, dass** die Zahneingriffe des ersten und des zweiten Exzenterrades (9, 10) mit Bezug auf die Zentralachse (11a) diametral zueinander angeordnet sind.

4. Stellgetriebe nach Anspruch 2 oder 3, **dadurch gekennzeichnet, dass** die beiden fest angeordneten Hohlräder (2, 4) abgestützt sind, so dass ein Verdrehen ausgeschlossen ist.

5. Stellgetriebe nach einem der Ansprüche 1 bis 4, **dadurch gekennzeichnet, dass** die Zentralwelle (11) als Antrieb und das umlaufende Hohlrad (3) als Abtrieb ausgebildet sind.

6. Stellgetriebe nach einem der Ansprüche 1 bis 5, **dadurch gekennzeichnet, dass** zwischen den beiden Exzenterrädern (9, 10) ein in axialer Richtung wirkendes Federelement angeordnet ist.

7. Stellgetriebe nach einem der Ansprüche 1 bis 6, **dadurch gekennzeichnet, dass** die Zentralwelle (11) als Hohlwelle ausgebildet ist.

8. Stellgetriebe nach einem der Ansprüche 1 bis 7, **dadurch gekennzeichnet, dass** eine Planetenradstufe vorhanden ist, wobei das Sonnenrad der Planetenradstufe mit der Antriebswelle (200) verbunden ist und ein Planetenrad (18) der Planetenradstufe durch die Welle (19) mit der Zentralwelle (11) verbunden ist.

9. Stell-getriebe nach Anspruch 8, **dadurch gekennzeichnet, dass** die Zentralwelle (11) am Planetenrad (18) und einem fest angeordneten Hohlrad (2, 4) abgestützt ist.

10. Stellgetriebe nach Anspruch 8, **dadurch gekennzeichnet, dass** die Zentralwelle (11) an beiden fest angeordneten Hohlrädern (2, 4) abgestützt ist.

11. Stellgetriebe nach einem der Ansprüche 1 bis 7, **dadurch gekennzeichnet, dass** die Stirnradstufe mit mindestens einem zweistufigen Stirnrad (30, 300) vorhanden ist, wobei das Stirnrad (30, 300) ortsfest und drehbar mit einem fest angeordneten Hohlrad (2, 4) verbunden ist.

## Claims

1. Actuating gear mechanism (1), comprising a set of internal gears (2, 3, 4) which are arranged coaxially with respect to a central axis (11a) and have cylindrical toothing systems (2a, 3a, 4a), two eccentric gears (9, 10) with beveloid toothing systems (9a, 10a) which are in tooth engagement with the cylindrical toothing systems (2a, 3a, 4a) of the internal gears (2, 3, 4), and eccentric axes (9b, 10b) which are inclined with respect to the central axis (11a), and a central shaft (11) which is driven by means of a drive shaft (200) and on which the eccentric gears (9, 10) are mounted, **characterized in that** the set of internal gears (2, 3, 4) comprises a central circulating internal gear (3) and two adjacent, fixedly arranged internal gears (2, 4).

2. Actuating gear mechanism according to Claim 1, **characterized in that** the first eccentric gear (9) is in tooth engagement with the first fixed internal gear (2) and the central circulating internal gear (3), and the second eccentric gear (10) is in tooth engagement with the second fixed internal gear (4) and the circulating internal gear (3).

3. Actuating gear mechanism according to Claim 1 or 2, **characterized in that** the tooth engagements of the first and the second eccentric gear (9, 10) are arranged diametrically with respect to one another in relation to the central axis (11a).

4. Actuating gear mechanism according to Claim 2 or 3, **characterized in that** the two internal gears (2, 4) which are arranged fixedly are supported, with the result that a rotation is ruled out.

5. Actuating gear mechanism according to one of Claims 1 to 4, **characterized in that** the central shaft (11) is configured as a drive and the circulating internal gear (3) is configured as an output.

6. Actuating gear mechanism according to one of Claims 1 to 5, **characterized in that** a spring element which acts in the axial direction is arranged between the two eccentric gears (9, 10).

7. Actuating gear mechanism according to one of Claims 1 to 6, **characterized in that** the central shaft (11) is configured as an internal shaft.

8. Actuating gear mechanism according to one of Claims 1 to 7, **characterized in that** there is a planetary gear stage, the sun gear of the planetary gear stage being connected to the drive shaft (200), and a planetary gear (18) of the planetary gear stage being connected to the central shaft (11) by way of the shaft (19).

9. Actuating gear mechanism according to Claim 8, **characterized in that** the central shaft (11) is supported on the planetary gear (18) and a fixedly arranged internal gear (2, 4).

10. Actuating gear mechanism according to Claim 8, **characterized in that** the central shaft (11) is supported on the two fixedly arranged internal gears (2, 4).

11. Actuating gear mechanism according to one of Claims 1 to 7, **characterized in that** there is the spur gear stage with at least one two-stage spur gear (30, 300), the spur gear (30, 300) being connected in a stationary and rotatable manner to a fixedly arranged internal gear (2, 4).

## Revendications

1. Mécanisme de réglage (1), comprenant un jeu de couronnes dentées (2, 3, 4) disposées coaxialement par rapport à un axe central (11a) avec des dentures cylindriques (2a, 3a, 4a), deux pignons excentriques (9, 10) avec des dentures béveloides (9a, 10a), qui s'engrènent avec les dentures cylindriques (2a, 3a, 4a) des couronnes dentées (2, 3, 4), et des axes excentriques (9b, 10b) qui sont inclinés par rapport à l'axe central (11a) et un arbre central (11) entraîné au moyen d'un arbre d'entraînement (200), sur lequel sont supportés les pignons excentriques (9, 10), **caractérisé en ce que** le jeu de couronnes dentées (2, 3, 4) comprend une couronne dentée (3) centrale rotative et deux couronnes dentées (2, 4) adjacentes, disposées fixement.

2. Mécanisme de réglage selon la revendication 1, **caractérisé en ce que** le premier pignon excentrique (9) s'engrène avec la première couronne dentée fixe (2) et la couronne dentée centrale rotative (3) et le deuxième pignon excentrique (10) s'engrène avec la deuxième couronne dentée fixe (4) et la couronne dentée rotative (3).

3. Mécanisme de réglage selon la revendication 1 ou 2, **caractérisé en ce que** les engrènements du premier et du deuxième pignon excentrique (9, 10) sont disposés de manière diamétralement opposée par rapport à l'axe central (11a).

4. Mécanisme de réglage selon la revendication 2 ou 3, **caractérisé en ce que** les deux couronnes dentées disposées fixement (2, 4) sont supportées de telle sorte qu'une rotation soit exclue.

5. Mécanisme de réglage selon l'une quelconque des revendications 1 à 4, **caractérisé en ce que** l'arbre central (11) est réalisé sous forme d'entraînement et la couronne dentée rotative (3) est réalisée sous forme de prise de force.

6. Mécanisme de réglage selon l'une quelconque des revendications 1 à 5, **caractérisé en ce qu'**entre les deux pignons excentriques (9, 10) est disposé un élément de ressort agissant dans la direction axiale.

7. Mécanisme de réglage selon l'une quelconque des revendications 1 à 6, **caractérisé en ce que** l'arbre central (11) est réalisé sous forme d'arbre creux.

8. Mécanisme de réglage selon l'une quelconque des revendications 1 à 7, **caractérisé en ce qu'**un étage de pignon planétaire est prévu, la roue solaire de l'étage de pignon planétaire étant connecté à l'arbre d'entraînement (200) et un pignon planétaire (18) de l'étage de pignon planétaire étant connecté à l'arbre central (11) par l'arbre (19).

9. Mécanisme de réglage selon la revendication 8, **caractérisé en ce que** l'arbre central (11) est supporté sur le pignon planétaire (18) et sur une couronne dentée disposée fixement (2, 4).

10. Mécanisme de réglage selon la revendication 8, **caractérisé en ce que** l'arbre central (11) est supporté sur les deux couronne dentées disposées fixement (2, 4).

11. Mécanisme de réglage selon l'une quelconque des revendications 1 à 7, **caractérisé en ce que** l'étage à pignon droit est pourvu d'au moins un pignon droit à deux étages (30, 300), le pignon droit (30, 300) étant connecté fixement et de manière rotative à une couronne dentée disposée fixement (2, 4).
